Europäisches Patentamt

European Patent Office

Office européen des brevets

(19)

(11) **EP 1 468 308 B1**

(12) **EUROPÄISCHE PATENTSCHRIFT**

(45) Veröffentlichungstag und Bekanntmachung des Hinweises auf die Patenterteilung:
**06.07.2005 Patentblatt 2005/27**

(21) Anmeldenummer: **03702345.4**

(22) Anmeldetag: **21.01.2003**

(51) Int Cl.⁷: **G01S 13/12**, G01S 17/36, G01S 17/10

(86) Internationale Anmeldenummer:
**PCT/DE2003/000166**

(87) Internationale Veröffentlichungsnummer:
**WO 2003/062851 (31.07.2003 Gazette 2003/31)**

(54) **VERFAHREN UND VORRICHTUNG ZUR OPTISCHEN ENTFERNUNGSMESSUNG**

METHOD AND DEVICE FOR OPTICAL DISTANCE MEASUREMENT

PROCEDE ET DISPOSITIF DE TELEMETRIE OPTIQUE

(84) Benannte Vertragsstaaten:
**AT BE BG CH CY CZ DE DK EE ES FI FR GB GR HU IE IT LI LU MC NL PT SE SI SK TR**

(30) Priorität: **23.01.2002 DE 10202672**
**26.06.2002 DE 10228644**

(43) Veröffentlichungstag der Anmeldung:
**20.10.2004 Patentblatt 2004/43**

(73) Patentinhaber: **Micro-Optronic-Messtechnik GMBH**
**01465 Langebrück (DE)**

(72) Erfinder: **SPERBER, Peter**
**94234 Viechtach (DE)**

(74) Vertreter: **Naumann, Ulrich, Dr.-Ing.**
**Patentanwälte,**
**Ullrich & Naumann,**
**Luisenstrasse 14**
**69115 Heidelberg (DE)**

(56) Entgegenhaltungen:
**EP-A- 1 152 259        US-A- 3 202 988**
**US-A- 3 246 322        US-A- 4 107 684**
**US-A- 4 170 023        US-A- 4 562 403**

• **U. TIETZE, CH. SCHENK:**
**"HALBLEITER-SCHALTUNGSTECHNIK" 1993 , SPRINGER-VERLAG , BERLIN XP002242694 Seite 959 -Seite 961**

## Beschreibung

Die vorliegende Erfindung betrifft ein Verfahren und eine Vorrichtung zur optischen Entfernungsmessung durch Aussendung eines amplitudenmodulierten und gebündelten optischen Signals und durch den Empfang des am Zielobjekt reflektierten Signals, wobei die Modulationsfrequenz über eine Regelschleife kontinuierlich so geregelt wird, dass zwischen dem ausgesandten und dem empfangenen Signal eine feste, von der Entfernung unabhängige Phasendifferenz herrscht.

Aus der EP 1 152 259 A2 ist ein optischer Distanzsensor bekannt, mit dem der Abstand zwischen dem optischen Distanzsensor und einem Zielobjekt bestimmt werden kann. Solche optischen Distanzsensoren werden beispielsweise bei industriellen Qualitätskontrollen oder Fertigungsprozessen eingesetzt, wo beispielsweise Blechdicken oder Abstände von Halbleiterplatinen zu einem Werkzeug zu detektieren sind. Weiterhin werden optische Distanzsensoren bei der Positionierung von Gegenständen eingesetzt, beispielsweise bei Aufzugsanlagen, wo die Aufzugkabine an jedem Stockwerk in einer Soll-Position zu positionieren ist. Auch bei Lagersystemen sind die Zugriffssysteme zum Zugriff auf die Lagerware entsprechend genau zu positionieren.

Der aus der EP 1 152 259 A2 bekannte optische Distanzsensor verwendet in seiner Entfernungs-Auswertungsschaltung zur Bestimmung der Phasenverschiebung zwischen Sende- und Empfangslichtstrahlen einen Synchrongleichrichter, der eine der Phasendifferenz proportionale Spannung ausgibt. Die vom Synchrongleichrichter ausgegebene Spannung dient zur Regelung des Stellglieds, so dass die Spannung einen vorgegebenen Wert erreicht.

Bei der so realisierten Regelung handelt es sich um eine kontinuierliche Regelung, die mit einem hohen Schaltungsaufwand einhergeht. Zum Erzielen einer hinreichend genauen und schnellen Regelschleife ist darüber hinaus der Schaltungsaufwand noch weiter zu erhöhen.

Der vorliegenden Erfindung liegt daher die Aufgabe zugrunde, ein Verfahren zur optischen Entfernungsmessung anzugeben und weiterzubilden, bei dem der Schaltungsaufwand der Entfernungs-Auswertungsschaltung bei hoher Genauigkeit reduziert wird und bei dem die Regelgeschwindigkeit weiter erhöht werden kann.

Das erfindungsgemäße Verfahren zur optischen Entfernungsmessung löst die voranstehende Aufgabe durch die Merkmale des Patentanspruchs 1. Danach ist ein solches Verfahren dadurch gekennzeichnet, dass die Detektion der Phasendifferenz mit einem Phasenkomparator erfolgt.

Erfindungsgemäß ist zunächst erkannt worden, dass der Schaltungsaufwand der Entfernungs-Auswertungsschaltung ganz erheblich reduziert werden kann, wenn anstelle des Synchrongleichrichters aus der entsprechenden Schaltung des aus der EP 1 152 259 A2 bekannten optischen Distanzsensors ein Phasenkomparator eingesetzt wird. Der Phasenkomparator vergleicht lediglich, ob die aktuell vorliegende Phasendifferenz zu groß oder zu klein ist. Der Phasenkomparator gibt ein entsprechendes Signal aus, womit - über die Regelschleife - die Modulationsfrequenz des amplitudenmodulierten optischen Signals erhöht oder verringert wird.

Hinsichtlich der Genauigkeit des Phasenkomparators ist vorgesehen, dass dieser derart ausgeführt ist, dass eine hohe Phasenauflösung in einem Intervall um die gewünschte Phase bzw. um eine Soll-Phasendifferenz herum aufweist. Die Phasenlagen außerhalb dieses Intervalls müssen nicht mit einer hohen Genauigkeit detektiert werden. Das Intervall kann sich nur über einen kleinen Bereich um die gewünschte Phase herum erstrecken. Vorzugsweise können für einen für verschiedene Applikationen einsetzbaren Phasenkomparator die Intervallgrenzen variabel eingestellt werden. Durch die erfindungsgemäßen Maßnahmen werden einerseits die Messgenauigkeit verglichen zu herkömmlichen Phasenmessverfahren deutlich erhöht und andererseits der Schaltungsaufwand erheblich reduziert.

Ganz allgemein vergleicht der Phasenkomparator, ob die gemessene Phase größer oder kleiner als eine Soll-Phasendifferenz ist. Hierbei ist die Soll-Phasendifferenz vorzugsweise vorgebbar. Letztendlich wird hierdurch sichergestellt, dass die Soll-Phasendifferenz auf die jeweilige Anwendung der jeweiligen optischen Entfernungsmessung flexibel einstellbar ist. Entsprechende Eingabevorkehrungen sind zur Variation der Soll-Phasendifferenz bei der Schaltung vorgesehen.

Vorzugsweise gibt der Phasenkomparator sein Messergebnis in Form einer digitalen Information aus, wobei in die digitale Information kodiert ist, dass die aktuell detektierte Phasendifferenz größer oder kleiner als die Soll-Phasendifferenz ist. Wie groß die jeweilige Abweichung von der Soll-Phasendifferenz tatsächlich ist, spielt hierbei zunächst keine Rolle.

Aufgrund der Ausgabe des Phasenkomparators, dass die aktuell detektierte Phasendifferenz kleiner oder größer als die Soll-Phasendifferenz ist, kann die Regelschleife als eine Zweipunktregelung realisiert werden. Dabei wird die Modulationsfrequenz kontinuierlich verändert. Der Betrag der Veränderungsrate ist konstant. Das Vorzeichen kann je nach Ausgabe des Phasenkomparators negativ oder positiv sein. Mit anderen Worten wird die Modulationsfrequenz entweder kontinuierlich vergrößert oder verkleinert. Nach jeder Messwertausgabe des Phasenkomparators ist eine Regelung möglich und grundsätzlich vorgesehen. Vorzugsweise wird die Modulationsfrequenz mit konstanter Rate vergrößert oder verkleinert, wobei die Rate je nach Messaufgabe einstellbar sein kann.

Falls die zeitliche Abfolge der Stellsignale der Zweipunktregelung kürzer als die Einstellzeit des die Modulationsfrequenz bereitstellenden Modulationsfrequenzgenerators ist, kann die durch die größere Einstellzeit bedingte Trägheit des Modulationsfrequenzgenerators zur Regelung ausgenützt werden. Hierbei wird die aktuell eingestellte Modulationsfrequenz in einem kleinen Frequenzbereich um den einzustellenden Sollwert der Modulationsfrequenz schwanken, insbesondere dann, wenn der Detektionszyklus des Phasenkomparators hierauf angepasst bzw. hierzu abgestimmt wird. Aufgrund der Ausgabe des Phasenkomparators wird die Steuerspannung am Modulationsfrequenzgenerator entweder erhöht oder verringert, die Steuerspannung bleibt also nicht konstant. Selbst wenn aufgrund der Zweipunktregelung die Modulationsfrequenz um den Sollwert schwankt und letztendlich nicht exakt allein mit Hilfe des Phasenkomparators einstellbar ist, kann dennoch der Sollwert entsprechend eingestellt werden, und zwar nach Mittelung der Schwankung der von dem Modulationsfrequenzgenerator bereitgestellten Modulationsfrequenzen über eine vorgebbare Messzeit. Hierdurch wird in besonders vorteilhafter Weise die Empfindlichkeit der Regelung in der Nähe des Sollwerts der Phasendifferenz gegenüber einer kontinuierlichen Phasenmessung drastisch erhöht.

Zu Beginn des Messvorgangs wird die Modulationsfrequenz ausgehend von einem vorgebbaren Anfangswert so lange variiert wird, bis der Phasenkomparator das Erreichen einer gewünschten - gegebenenfalls ebenfalls vorgebbaren - Phasendifferenz detektiert. Der vorgebbare Anfangswert könnte beispielsweise auf eine Modulationsfrequenz festgelegt werden, die kleiner als die erwartete Modulationsfrequenz ist, die der gewünschten Phasendifferenz bzw. Soll-Phasendifferenz entspricht. In diesem Fall wäre die Anfangsmodulationsfrequenz zu erhöhen, und zwar bis der Phasenkomparator das Erreichen der gewünschten Phasendifferenz detektiert. Hierbei kann es erforderlich sein, dass der vorgebbare Anfangswert ungefähr auf den Wert eingestellt wird, der der erwarteten bzw. zu messenden Entfernung zum Messobjekt entspricht. Eine Relativbewegung zwischen dem Messobjekt und dem optischen Entfernungsmesser ändert an der Dauer der Einstellphase nichts.

Als Modulationssignal dient ganz allgemein ein periodisches Signal, also beispielsweise ein sinusförmiges Signal. In ganz besonders bevorzugter Weise dient als Modulationssignal ein Pulsfolgesignal. Hierbei könnte die jeweilige Pulsdauer der jeweiligen Dauer zwischen zwei aufeinanderfolgende Pulse entsprechen oder das Pulsfolgesignal könnte sich aus kurzen Pulsen zusammensetzen. Im letzteren Fall ist die Pulsdauer kürzer als die Dauer zwischen zwei aufeinanderfolgende Pulse. Durch ein Pulsfolgesignal können in besonders vorteilhafter Weise sehr schnelle Signalanstiegszeiten erzielt werden, wodurch die Genauigkeit der Phasendetektion im interessierenden Bereich weiter erhöht wird. Es sind damit Bandbreiten erreichbar, die bei den aus dem Stand der Technik bekannten Phasenmessverfahren wegen den diesen Verfahren inhärenten Mehrdeutigkeiten nicht erreichbar sind. Eventuelle Amplitudenschwankungen der Pulse werden mit einem Delayed Symmetry Discriminator elektronisch kompensiert, wodurch Detektionsartefakte minimiert werden können.

Im Konkreten erfolgt die Regelung der Modulationsfrequenz mit Hilfe der Regelschleife derart, dass die Phasendifferenz zwischen einem empfangenen Puls und einem der nächsten auszusendenden Pulse konstant geregelt wird.

Die Laufzeit t des optischen Signals zum Messobjekt und zurück errechnet sich als ganzzahliges Vielfaches der Periodendauer dt des ausgesandten Signals gemäß der Formel

$$t = n * dt$$

Die ganze Zahl n kann dabei Werte zwischen 1 und großen Zahlen annehmen, d.h. die Phasendifferenz ist immer größer als 360 Grad. Hierbei ist noch ein fester, durch eine Kalibrierung zu bestimmender Offset zu berücksichtigen, der der Einfachheit halber in der obigen Formel nicht berücksichtigt ist. Falls die ganze Zahl n den Wert 1 entnimmt, gibt es keine Mehrdeutigkeit der Messung. In diesem Fall wird die Phasendifferenz zwischen einem empfangenen Puls und dem nächsten auszusendenden Puls konstant geregelt. Falls die ganze Zahl n größer als 1 ist, könnten - falls bei großen Messentfernungen schnelle Messzeiten gefordert werden - Mehrdeutigkeiten durch relativ ungenaue Vormessungen ausgeräumt werden. Die zu messende Entfernung berechnet sich dann als Produkt der einfachen Laufzeit t/2 mit der in dem jeweiligen Medium herrschenden Lichtgeschwindigkeit. Grundsätzlich wird die Phasendifferenz von der Schaltung vorgegeben.

Durch die Messung der Modulationsfrequenz, aus der sich die Periodendauer ergibt, wird die Entfernung zum Zielobjekt errechnet. Es handelt sich hierbei um eine direkte Frequenzmessung, wobei mit dem erfindungsgemäßen Verfahren eine sehr schnelle Mittelung über extrem viele Impulslaufzeitmessungen durchgeführt werden kann. Die Zeit für eine Einzelmessung muss in vorteilhafter Weise nicht länger als die Signallaufzeit zum Zielobjekt und zurück sein. Somit sind die Messzeiten zur Erreichung einer hohen Messgenauigkeit um Größenordnungen kürzer als bei reinem Impulslaufzeitmessverfahren mit nachträglicher Mittelung über Einzelmessungen.

In vorrichtungsmäßiger Hinsicht wird die eingangs genannte Aufgabe durch die Merkmale des Patentanspruchs 16 gelöst. Hiernach ist eine Vorrichtung zur optischen Entfernungsmessung dadurch gekennzeichnet, dass die Phasendifferenz mit einem Phasenkomparator detektierbar ist. Vorzugsweise dient die erfindungsgemäße Vorrichtung zur Durchführung eines Verfahrens nach einem der Ansprüche 1 bis 15, so dass zur Vermeidung von Wiederholungen auf den vorigen Teil der Beschreibung verwiesen wird.

Im Folgenden wird eine konkrete Ausführungsform der erfindungsgemäßen Vorrichtung zur optischen Entfernungsmessung beschrieben. Hierbei wird das Modulationsfrequenzsignal mit einem VCO (Voltage-Controlled-Oscillator) erzeugt. Das vom VCO erzeugte Modulationsfrequenzsignal wird von einem dem VCO nachgeordneten Verstärker verstärkt. Mit dem so verstärkten Modulationsfrequenzsignal wird die Lichtquelle amplitudenmoduliert. Als Lichtquelle könnte eine LED (Light Emitting Diode) oder ein Laser dienen. Hierbei werden üblicherweise Lichtquellen verwendet, deren Wellenlängen im roten oder im infraroten Wellenlängenbereich liegen. Falls die Lichtquelle eine hohe Divergenz aufweist, könnte das Licht der Lichtquelle mit einem Fokussiermittel, vorzugsweise mit einer Linse und/oder einem Reflektorspiegel, gebündelt oder kolinearisiert werden.

Zur Detektion des am Zielpunkt reflektierten Lichts kann der Detektor eine Photodiode aufweisen, sofern das Zielobjekt mit einem Retroreflektor versehen ist. Ansonsten ist der Detektor mit einer Lawinendiode oder mit einem Photomuliplier ausgestattet. Die Lawinendiode oder der Photomuliplier wird bevorzugt einzusetzen sein, wenn die zu messende Entfernung sehr groß ist und daher die Intensität des zu detektierenden Lichts sehr gering ist und/oder das Zielobjekt aufgrund optischer Streuung nur wenig Licht in Richtung des Detektors reflektiert.

Mit dem Phasenkomparator ist die relative Phasenlage zwischen dem Modulationsfrequenzsignal und dem Detektorausgangssignal ermittelbar. Das Ausgangssignal des Phasenkomparators wird der Regelschleife zugeführt, mit der ein Korrektursignal für den Modulationsfrequenzgenerator erzeugt wird. Durch die Messung der Modulationsfrequenz wird die Entfernung zwischen der erfindungsgemäßen Vorrichtung und dem Zielobjekt errechnet.

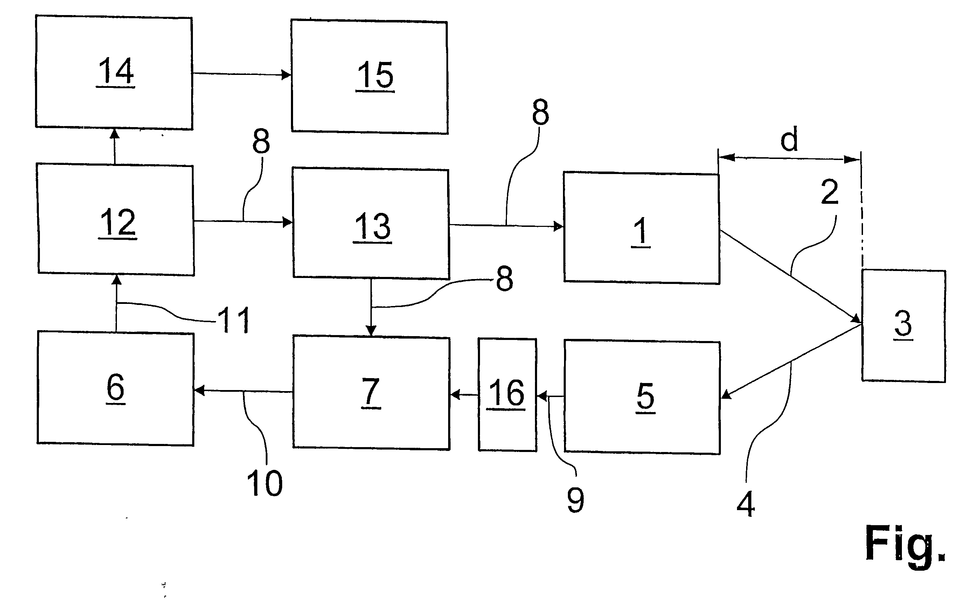

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 16 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt die einzige

Fig. eine schematische Darstellung eines Ausführungsbeispiels einer erfindungsgemäßen Vorrichtung zur optischen Entfernungsmessung.

Die Vorrichtung zur optischen Entfernungsmessung sendet durch den optischen Sender 1 ein amplitudenmoduliertes optisches Signals 2 aus. Das am Zielobjekt 3 reflektierte Signal 4 detektiert der optische Detektor 5, wobei das Zielobjekt sich in einer Entfernung d von der Vorrichtung zur optischen Entfernungsmessung befindet. Die Modulationsfrequenz wird über eine Regelschleife 6 kontinuierlich so geregelt wird, dass zwischen dem ausgesandten Signal 2 und dem empfangenen Signal 4 eine feste, von der Entfernung d unabhängige Phasendifferenz herrscht.

Erfindungsgemäß erfolgt die Detektion der Phasendifferenz mit einem Phasenkomparator 7, der vergleicht, ob die gemessene Phase größer oder kleiner als eine Soll-Phasendifferenz ist. Im Konkreten wird mit dem Phasenkomparator 7 die relative Phasenlage zwischen dem vom Verstärker 13 verstärkten Modulationsfrequenzsignal 8 und dem Detektorausgangssignal 9 ermittelt. Der Phasenkomparator 7 gibt ein digitale Information 10 aus, die einer positiven oder einer negativen Spannung entspricht. Dieses digitale Ausgangssignal 10 des Phasenkomparators 7 wird der Regelschleife 6 zugeführt. Die Regelschleife 6 ist als Zweipunktregelung realisiert, die ein Korrektursignal 11 für den Modulationsfrequenzgenerator 12 erzeugt. Als Modulationssignal dient ein periodisches Signal, das ein Pulsfolgesignal ist und sich aus kurzen Pulsen zusammensetzt.

Das Modulationsfrequenzsignal 8 wird mit einem VCO 12 (Voltage-Controlled-Oscillator) erzeugt bzw. bereitgestellt, das von dem Verstärker 13 verstärkt wird. Mit dem verstärkten Modulationsfrequenzsignal 8 wird die Lichtquelle bzw. der optische Sender 1 amplitudenmoduliert. Durch die Messung der Modulationsfrequenz dem Frequenzmesser 14 wird die Entfernung d zwischen der Vorrichtung und dem Zielobjekt 3 im Modul 15 errechnet.

Abschließend sei ganz besonders darauf hingewiesen, dass das voranstehend erörterte Ausführungsbeispiel lediglich zur Beschreibung der beanspruchten Lehre dient, diese jedoch nicht auf das Ausführungsbeispiel einschränken.

Zwischen dem optischen Detektor 5 und dem Phasenkomperator 7 kann ein Diskriminator 16 angeordnet sein.

**Patentansprüche**

1. Verfahren zur optischen Entfernungsmessung durch Aussendung eines amplitudenmodulierten und gebündelten optischen Signals und durch den Empfang des am Zielobjekt reflektierten Signals, wobei die Modulationsfrequenz über eine Regelschleife mittels eines VCO (Voltage-Controlled-Oscillator) kontinuierlich so geregelt wird, dass zwischen dem ausgesandten und dem empfangenen Signal eine feste, von der Entfernung unabhängige Phasendifferenz herrscht, **dadurch gekennzeichnet, dass** die Detektion der Phasendifferenz mittels eines Phasenkomparators derart durchgeführt wird, dass der Phasenkomparator ausschließlich vergleicht, ob die gemessene Phase größer oder kleiner als eine - vorzugsweise vorgebbare - Soll-Phasendifferenz ist.

2. Verfahren nach Anspruch 1, **dadurch gekennzeichnet, dass** der Phasenkomparator eine hohe Phasenauflösung in einem Intervall um die Soll-Phasendifferenz aufweist, wobei vorzugsweise die Auflösung über die Regelkreisverstärkung eingestellt wird.

3. Verfahren nach Anspruch 1 oder 2, **dadurch gekennzeichnet, dass** die Phasendifferenz von der Schaltung vorgegeben wird.

4. Verfahren nach einem der Ansprüche 1 bis 3, **dadurch gekennzeichnet, dass** der Phasenkomparator eine digitale Information ausgibt.

5. Verfahren nach einem der Ansprüche 1 bis 4, **dadurch gekennzeichnet, dass** die Regelschleife eine Zweipunktregelung realisiert, die vorzugsweise nur das Vorzeichen der Änderungsrate der Modulationsfrequenz ändert, wobei die zeitliche Abfolge der Stellsignale der Zweipunktregelung kürzer als die Einstellzeit des die Modulationsfrequenz bereitstellenden Modulationsfrequenzgenerators sein kann.

6. Verfahren nach einem der Ansprüche 1 bis 5, **dadurch gekennzeichnet, dass** zu Beginn des Messvorgangs die Modulationsfrequenz ausgehend von einem vorgebbaren Anfangswert so lange variiert wird, bis der Phasenkomparator das Erreichen einer gewünschten oder der Soll-Phasendifferenz detektiert.

7. Verfahren nach einem der Ansprüche 1 bis 6, **dadurch gekennzeichnet, dass** als Modulationssignal ein periodisches Signal dient, vorzugsweise ein sinusförmiges Signal oder dass als Modulationssignal ein Pulsfolgesignal dient, wobei sich das Pulsfolgesignal vorzugsweise aus kurzen Pulsen zusammensetzt und/oder wobei die Amplitudenschwankungen der Pulse vorzugsweise mit einem Delayed Symmetry Discriminator kompensiert werden.

8. Verfahren nach Anspruch 7, **dadurch gekennzeichnet, dass** die Phasendifferenz zwischen einem empfangenen Puls und einem der nächsten auszusendenden Pulse konstant geregelt wird oder dass die Phasendifferenz zwischen einem empfangenen Puls und dem nächsten auszusendenden Pulsen konstant geregelt wird.

9. Verfahren nach einem der Ansprüche 1 bis 8, **dadurch gekennzeichnet, dass** die Laufzeit des optischen Signals zum Zielobjekt und zurück sich - bis auf einen zu kalibrierenden Offset - als ganzzahliges Vielfaches der Periodendauer des ausgesandten Signals errechnet wird.

10. Vorrichtung zur optischen Entfernungsmessung durch Aussendung eines amplitudenmodulierten und gebündelten optischen Signals und durch den Empfang des am Zielobjekt reflektierten Signals, wobei die Modulationsfrequenz über eine Regelschleife mittels eines VCO (Voltage-Controlled-Oscillator) kontinuierlich so regelbar ist, dass zwischen dem ausgesandten und dem empfangenen Signal eine feste, von der Entfernung unabhängige Phasendifferenz herrscht, vorzugsweise zur Durchführung eines Verfahrens nach einem der Ansprüche 1 bis 9,
**dadurch gekennzeichnet, dass** die Phasendifferenz mit einem Phasenkomparator derart detektierbar ist, dass der Phasenkomparator ausschließlich das Vorzeichen der Abweichung der IST-Phasenlage von der SOLL-Phasenlage zwischen dem Modulationsfrequenzsignal und dem Detektorausgangssignal ermittelt.

11. Vorrichtung nach Anspruch 10, **dadurch gekennzeichnet, dass** das vom VCO erzeugte Modulationsfrequenzsignal von einem dem VCO nachgeordneten Verstärker verstärkbar ist.

12. Vorrichtung nach Anspruch 10 oder 11, **dadurch gekennzeichnet, dass** mit dem Modulationsfrequenzsignal eine Lichtquelle amplitudenmodulierbar ist, wobei die Lichtquelle vorzugsweise eine LED (Light Emitting Diode) oder einen Laser aufweist und/oder wobei das Licht der Lichtquelle mit Fokussiermittel bündelbar ist, vorzugsweise mit einer Linse und/oder einem Reflektorspiegel.

13. Vorrichtung nach einem der Ansprüche 10 bis 12, **dadurch gekennzeichnet, dass** der das am Zielobjekt reflektierte Licht detektierende Detektor eine Photodiode, eine Lawinendiode oder einen Photomultiplier aufweist.

14. Vorrichtung nach einem der Ansprüche 10 bis 13, **dadurch gekennzeichnet, dass** das Ausgangssignal des Phasenkomparators der Regelschleife zuführbar ist und/oder dass mit der Regelschleife ein Korrektursignal für den Modulationsfrequenzgenerator erzeugbar ist und/oder dass durch die Messung der Modulationsfrequenz die Entfernung zwischen der Vorrichtung und dem Zielobjekt errechenbar ist.

## Claims

1. A method for optically measuring a distance by emitting an amplitude-modulated and focussed optical signal and by receiving the signal reflected from the target object, the modulation frequency being continuously regulated by way of a control loop by means of a VCO (Voltage-Controlled Oscillator) in such a way that between the emitted and the received signal there is a fixed phase difference independent of the distance, **characterised in that** detection of the phase difference by way of a phase comparator is carried out in such a way that the phase comparator compares exclusively whether the measured phase is greater or smaller than a - preferably predeterminable - set-point phase difference.

2. A method according to claim 1, **characterised in that** the phase comparator has a high phase resolution at an interval around the set-point phase difference, the resolution preferably being adjusted by way of the control circuit amplification.

3. A method according to claim 1 or 2, **characterised in that** the phase difference is predetermined by the circuit.

4. A method according to any one of claims 1 to 3, **characterised in that** the phase comparator outputs digital information.

5. A method according to any one of claims 1 to 4, **characterised in that** the control loop realises a two-position control that modifies preferably only the sign of the variation rate of the modulation frequency, the time sequence of the actuating signals of the two-position control being shorter than the adjusting time of the modulation frequency generator producing the modulation frequency.

6. A method according to any one of claims 1 to 5, **characterised in that** at the beginning of the measuring process the modulation frequency is varied, starting from a predeterminable initial value, until the phase comparator detects reaching of a desired or the set-point phase difference.

7. A method according to any one of claims 1 to 6, **characterised in that** a periodic signal, preferably a sinusoidal signal, is used as the modulation signal or **in that** a pulse train signal is used as the modulation signal, the pulse train signal preferably being made up of short pulses and/or the amplitude fluctuations of the pulses preferably being compensated with a delayed symmetry discriminator.

8. A method according to claim 7, **characterised in that** the phase difference between a received pulse and one of the next pulses to be emitted is constantly regulated or **in that** the phase difference between a received pulse and the next pulse to be emitted is constantly regulated.

9. A method according to any one of claims 1 to 8, **characterised in that** the transit time of the optical signal to the target object and back is computed, except for an offset to be calibrated, as an integral multiple of the period of the emitted signal.

10. A device for optically measuring a distance by emitting an amplitude-modulated and focussed optical signal and by receiving the signal reflected from the target object, the modulation frequency being continuously regulatable by way of a control loop by means of a VCO (Voltage-Controlled Oscillator) in such a way that between the emitted and the received signal there is a fixed phase difference independent of the distance, preferably for implementing the method according to any one of claims 1 to 9, **characterised in that** the phase difference is detectable with a phase comparator in such a way that the phase comparator determines exclusively the sign of the variation of the ACTUAL phase position from the DESIRED phase position between the modulation frequency signal and the detector output signal.

11. A device according to claim 10, **characterised in that** the modulation frequency signal generated by the VCO is amplifiable by an amplifier arranged downstream of the VCO.

12. A device according to claim 10 or 11, **characterised in that** the amplitude of a light source is modulatable with the modulation frequency signal, the light source comprising preferably an LED (Light Emitting Diode) or a laser and/or the light of the light source being arranged to be focussed, preferably with a lens and/or a reflector mirror.

13. A device according to any one of claims 10 to 12, **characterised in that** the detector detecting the light reflected from the target object comprises a photodiode, an avalanche diode, or a photomultiplier.

14. A device according to any one of claims 10 to 13, **characterised in that** the output signal of phase comparator is suppliable to the control loop and/or **in that** a correction signal for the modulation frequency signal is producible with the control loop and/or **in that** the distance between the device and the target object is computable by measuring the modulation frequency.

**Revendications**

1. Procédé de télémétrie optique par émission d'un signal optique modulé en amplitude et focalisé et par la réception du signal réfléchi sur l'objet cible, la fréquence de modulation étant régulée en continu par l'intermédiaire d'une boucle de régulation au moyen d'un VCO (Voltage Controlled Oscillator) de telle manière que règne entre le signal émis et le signal reçu une différence de phase fixe indépendante de la distance,
**caractérisé par le fait que** la détection de la différence de phase est effectuée au moyen d'un comparateur de phase de telle manière que le comparateur de phase compare exclusivement si la phase mesurée est plus grande ou plus petite qu'une différence de phase prescrite - de préférence pouvant être prédéfinie -.

2. Procédé selon la revendication 1,
**caractérisé par le fait que** le comparateur de phase présente une résolution élevée dans un intervalle autour de la différence de phase prescrite, la résolution étant de préférence révélée par l'intermédiaire de l'amplification du circuit de réglage.

3. Procédé selon la revendication 1 ou 2,
**caractérisé par le fait que** la différence de phase est prédéfinie par le circuit.

4. Procédé selon l'une des revendications 1 à 3,
**caractérisé par le fait que** le comparateur de phase sort une information numérique.

5. Procédé selon l'une des revendications 1 à 4,
**caractérisé par le fait que** la boucle de régulation réalise une régulation à deux positions qui ne modifie que le signe de la fréquence de modification de la modulation de fréquence, la succession dans le temps des signaux de réglage de la régulation à deux positions pouvant être plus courte que le temps de réponse du générateur de fréquence de modulation fournissant la fréquence de modulation.

6. Procédé selon l'une des revendications 1 à 5,
**caractérisé par le fait que**, au départ du processus de mesure, la fréquence de modulation est variée en partant d'une valeur de départ pouvant être prédéfinie jusqu'à ce que le comparateur de phase détecte une différence de phase souhaitée ou la différence de phase prescrite.

7. Procédé selon l'une des revendications 1 à 6,
**caractérisé par le fait qu'**un signal périodique, de préférence un signal sinusoïdal, sert de signal de modulation ou qu'un signal à train d'impulsions sert de signal de modulation, le signal à train d'impulsions étant de préférence composé d'impulsions courtes et/ou les oscillations d'amplitude des impulsions étant de préférence compensées par un Delayed Symmetry Discriminator.

8. Procédé selon la revendication 7,
**caractérisé par le fait que** la différence de phase entre une impulsion reçue et l'une des impulsions suivantes à émettre est réglée constante ou que la différence de phase entre une impulsion reçue et l'impulsion suivante à émettre est réglée constante.

9. Procédé selon l'une des revendications 1 à 8,
**caractérisé par le fait que** la durée de parcours du signal optique à l'objet cible et retour se calcule - à l'exception d'un décalage à calibrer - comme un multiple entier de la durée de période du signal émis.

10. Dispositif de télémétrie optique par émission d'un signal optique modulé en amplitude et focalisé et par la réception du signal réfléchi sur l'objet cible, la fréquence de modulation étant régulée en continu par l'intermédiaire d'une boucle de régulation au moyen d'un VCO (Voltage Controlled Oscillator) de telle manière que règne entre le signal émis et le signal reçu une différence de phase fixe indépendante de la distance, de préférence pour la mise en oeuvre d'un procédé selon l'une des revendications 1 à 9,
**caractérisé par le fait que** la différence de phase peut être détectée par un comparateur de phase de telle manière que le comparateur de phase détermine exclusivement le signe de la divergence de la position de phase effective d'avec la position de phase de consigne entre le signal de fréquence de modulation et le signal de sortie du détecteur.

11. Dispositif selon la revendication 10,
**caractérisé par le fait que** le signal de fréquence de modulation engendré par le VCO peut être amplifié par un amplificateur intercalé après le VCO.

12. Dispositif selon la revendication 10 ou 11,
**caractérisé par le fait qu'**une source lumineuse peut être modulée en amplitude par le signal de fréquence de modulation, la source lumineuse présentant de préférence une LED (Light Emitting Diode) ou un laser et/ou la lumière de la source lumineuse pouvant être focalisée par un moyen de focalisation, de préférence par une lentille et/ou un miroir réflecteur.

13. Dispositif selon l'une des revendications 10 à 12,
**caractérisé par le fait que** le détecteur qui détecte la lumière réfléchie sur l'objet cible présente une photodiode, une diode à avalanche ou un photomultiplicateur.

**14.** Dispositif selon l'une des revendications 10 à 13, **caractérisé par le fait que** le signal de départ du comparateur de phase peut être amené à la boucle de régulation et/ou qu'un signal de correction pour le générateur de fréquence de modulation peut être engendré par la boucle de régulation et/ou que la distance entre le dispositif et l'objet cible peut être calculée par la mesure de la fréquence de modulation.

Fig.

EP 1 468 308 B1